# EUROPÄISCHE PATENTSCHRIFT

(11) **EP 1 746 668 B1**
(45) Veröffentlichungstag und Bekanntmachung des Hinweises auf die Patenterteilung: **11.11.2009**
(21) Anmeldenummer: 06014772.5
(22) Anmeldetag: 15.07.2006
(51) Int. Cl.: H01L 41/09, H02N 2/04

(54) **Antriebsvorrichtung zum linearen Bewegen von länglichen Körpern**
Driving device for linearly moving elongate bodies
Dispositif d'entraînement pour deplacer linéairement des corps oblongs

(30) Priorität: 18.07.2005 DE 102005033455
(43) Veröffentlichungstag der Anmeldung: 24.01.2007
(73) Patentinhaber: GEMÜ Gebrüder Müller Apparatebau GmbH & Co. KG, 74653 Ingelfingen (DE)
(72) Erfinder: Müller, Fritz, 74653 Ingelfingen (DE); Baecke, Martin, Dr., 06847 Dessau (DE)
(74) Vertreter: Dreiss

(56) Entgegenhaltungen:
- EP-A- 0 309 886
- EP-A- 0 427 163
- WO-A-2005/043739
- DE-A1- 4 329 163
- DE-A1- 19 820 514
- JP-A- 5 038 165
- JP-A- 5 137 353
- JP-A- 63 048 168
- US-A- 5 404 066
- KIM J ET AL: "A hybrid inchworm linear motor" MECHATRONICS, PERGAMON PRESS, OXFORD, GB, Bd. 12, Nr. 4, 1. Mai 2002 (2002-05-01), Seiten 525-542, XP004339181 ISSN: 0957-4158

## Beschreibung

Die Erfindung betrifft eine Antriebsvorrichtung zum linearen Bewegen von länglichen Körpern, wie beispielsweise Ventilstößel für verschiedene Ventile, wie Sitz-, Membran- und Sonderventile, Zylinder zur Betätigung von Vorrichtungen oder Schieber, gemäß den Merkmalen des Oberbegriffs des Anspruchs 1.

Herkömmlich werden längliche Körper hauptsächlich pneumatisch betrieben. In Zusammenhang mit möglichen Einsparungen von Druckerzeugerstationen stellt sich aber die Frage nach alternativen Antriebskonzepten. Aus der JP 05 038165 ist eine Antriebsvorrichtung zum Bewegen von länglichen Körpern bekannt, die eine Halte- und Bewegungseinrichtung mit Piezoelementen mit einer Verzahnung aufweist. Eine derartige Antriebsvorrichtung besitzt aber relativ große Verstellintervalle.

Es ist somit eine Aufgabe der Erfindung, eine Antriebsvorrichtung zum linearen Bewegen von länglichen Körpern zur Verfügung zu stellen, die kleine Verstellintervalle aufweist.

Diese Aufgabe wird erfindungsgemäß durch die im Anspruch 1 angegebene Antriebsvorrichtung gelöst. Die abhängigen Ansprüche 2 bis 4 zeigen spezielle Ausführungsformen der Antriebsvorrichtung gemäß Anspruch 1.

Die erfindungsgemäße Antriebsvorrichtung ist als Piezoantrieb ausgebildet. Sie weist eine Halteeinrichtung zum Halten des länglichen Körpers an seinem Umfang während eines Ruhezustands und/oder während eines Bewegungszustands und eine Bewegungseinrichtung auf. Die Bewegungseinrichtung veranlasst eine Bewegung des länglichen Körpers in seiner Längsachsenrichtung. Insbesondere weisen die Halteeinrichtung und die Bewegungseinrichtung jeweils Piezoelemente auf.

Dabei weisen die Halteeinrichtung und die Bewegungseinrichtung eine am länglichen Körper ausgebildete Verzahnung und innerhalb eines an der Antriebsvorrichtung fixierten Rahmens, in welchem der längliche Körper verläuft, gelagerte einzelne an jeweiligen Piezoelementen vorgesehene Zähne auf, die der Verzahnung gegenüberliegen, wobei die Verzahnung einen Zahn weniger aufweist, als Piezoelemente mit Zähnen vorgesehen sind. Um den länglichen Körper sind mehrere Rahmen mit Piezoelementen und zugehörigen Zähnen um den länglichen Körper zur Verkleinerung der Verstellintervalle so angeordnet, dass sie entlang seiner Längsachse geringfügig versetzt sind, wobei eine Betätigung von Piezoelementen zum Bringen von Zähnen in Eingriff mit Zahnlücken der Verzahnung von Rahmen zu Rahmen erfolgt.

Die Zähne und die Verzahnung berühren sich in einer Ruheposition nicht und in einer Anfangsposition greift ein erster Zahn in eine gegenüberliegende Zahnlücke der Verzahnung ein, indem er durch das zugehörige Piezoelement vom jeweiligen Rahmen aus ausgestreckt wird, so dass der längliche Körper gehalten wird, und weiterhin werden die Zähne durch die jeweils zugehörigen Piezoelemente aufeinander folgend vom Rahmen aus ausgestreckt und in Eingriff mit jeweiligen Zahnlücken der Verzahnung gebracht, so dass aufgrund der unterschiedlichen Anzahl von Zähnen und Zähnen der Verzahnung und der daraus resultierenden Steigungsdifferenz zwischen den Zähnen und der Verzahnung eine Bewegung des länglichen Körpers erfolgt.

Insbesondere weist die Antriebsvorrichtung auch eine Steuerungs- und Schalteinrichtung zur gewünschten Aktivierung und Deaktivierung der Piezoelemente auf. Der längliche Körper kann insbesondere ein Ventilstößel für verschiedene Ventile, wie Sitz-, Membran- und Sonderventile, ein Zylinder zur Betätigung einer Vorrichtung oder eine Schieber sein.

Durch die Ausgestaltung der Antriebsvorrichtung unter Verwendung von Piezoelementen können nicht nur Druckerzeugerstationen eingespart werden. Es können auch Vorteile in Bezug auf Bewegungsgeschwindigkeiten und im Falle von Ventilstößeln in Bezug auf Verstell- und Schließgeschwindigkeiten erreicht werden. Die Antriebseinrichtung kann relativ klein ausgebildet werden. Eine sehr genaue Positionierung des länglichen Körpers wird ermöglicht. Weiterhin wird auch ein stromloses Halten und/oder Bewegen ermöglicht, wodurch ein Energieverbrauch verringert werden kann.

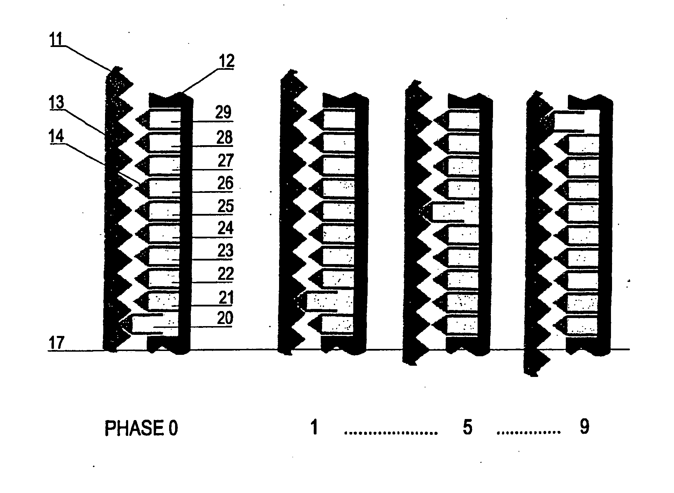

Weitere Einzelheiten, Merkmale und Vorteile der Erfindung ergeben sich aus der folgenden detaillierten Beschreibung einer bevorzugten Ausführungsform unter Bezugnahme auf die beigefügte Zeichnung, die eine Prinzipdarstellung einer Antriebsvorrichtung gemäß der bevorzugten Ausführungsform der Erfindung bei verschiedenen Antriebsphasen zeigt.

Die Zeichnung zeigt eine Prinzipdarstellung einer Antriebsvorrichtung gemäß der vorliegenden Erfindung, wobei ein länglicher Körper 11, von welchem nur eine (rechte) Längsseite gezeigt ist, mit einer Verzahnung 13 versehen ist. Der längliche Körper 11 verläuft innerhalb eines an der Antriebsvorrichtung fixierten Rahmens 12. In diesem Rahmen 12 sind einzelne Zähne 14 vorgesehen, die an jeweiligen am Rahmen 12 befestigten Piezoelementen 20, 21, ..., 29 angebracht sind und die der Verzahnung 13 des länglichen Körpers 11 gegenüberliegen. Die Verzahnung 13 weist einen Zahn weniger auf, als Piezoelemente 20, 21, ..., 29 mit Zähnen 14 vorgesehen sind. Die Halteeinrichtung und die Bewegungseinrichtung der Erfindung entsprechen somit der Verzahnung 13 und den Zähnen 14 an den Piezoelementen 20, 21, ..., 29 der dargestellten Antriebsvorrichtung.

In der Zeichnung sind beispielhaft verschieden Antriebsphasen, PHASE 0 bis 9, der Antriebsvorrichtung gezeigt. Die Zähne 14 und die Verzahnung 13 berühren sich in einer Ruheposition nicht. In einer mit PHASE 0 bezeichneten Anfangsposition greift ein erster Zahn 14 in eine gegenüberliegende Zahnlücke der Verzahnung 13 ein, indem er durch das zugehörige Piezoelement 20 vom Rahmen 12 aus ausgestreckt wird, so dass der längliche Körper 11 gehalten wird. In weiteren Antriebsphasen werden die Zähne 14 durch jeweils zugehörige Piezoelemente 21, ..., 29 aufeinander folgend vom Rahmen 12 aus ausgestreckt und in Eingriff mit jeweiligen Zahnlücken der Verzahnung 13 gebracht, so dass der längliche Körper 11 aufgrund der unterschiedlichen Anzahl von Zähnen 14 und Zähnen der Verzahnung 13 und der daraus resultierenden Steigungsdifferenz zwischen den Zähnen 14 und der Verzahnung 13 eine Bewegung des länglichen Körpers 11 erfolgt. Als Beispiele sind die Antriebsphasen PHASE 1, PHASE 5 und PHASE 9 gezeigt, wobei die Markierung 17 anzeigt, dass der längliche Körper 11 hier in Richtung zu dem Zahn 14 mit dem zugehörigen Piezoelement 20 bewegt wird.

Damit der längliche Körper 11 innerhalb des Rahmens 12 nicht rutscht, muss immer wenigstens ein Zahn 14 in Eingriff mit einer Zahnlücke der Verzahnung stehen. Er darf während des Antreibens also erst dann zurückgezogen werden, wenn ein nächster Zahn 14 schon fast vollständig in Eingriff mit der Verzahnung 13 ist.

Die Zähne 14 müssen nicht als Einzelelemente ausgebildet sein, wie es in der Zeichnung gezeigt ist, sondern sie können auch als verformbare Zahnstange ausgebildet sein, von der dann die jeweiligen Zahnelemente durch die Piezoelemente 20, 21, ..., 29 in Richtung zu der Verzahnung 13 gebracht werden.

Zur Verkleinerung der Verstellintervalle sind mehrere Rahmen 12 mit Piezoelementen 20, 21, ..., 29 und zugehörigen Zähnen 14 um den länglichen Körper 11 so angeordnet, dass sie entlang seiner Längsachse geringfügig versetzt sind, wobei eine Betätigung von Piezoelementen 20, 21, ..., 29 erfolgt, um die Zähne 14 in Eingriff mit Zahnlücken der Verzahnung 13 von Rahmen 12 zu Rahmen 12 erfolgt.

Bei dieser Ausführungsform gemäß der vorliegenden Erfindung kann ein Bewegen und/oder Halten durch ein Piezoelement stromlos erfolgen. Gemäß dieser Ausführungsform können hohe Umstellgeschwindigkeiten und eine hohe Ortsauflösung erreicht werden.

Es ist klar, dass bei der Ausführungsform der Erfindung eine Steuerungs- und Schalteinrichtung zur gewünschten Aktivierung und Deaktivierung der Piezoelemente vorgesehen sein muss. Der längliche Körper kann ein Ventilstößel für verschiedene Ventile, wie Sitz-, Membran- und Sonderventile, ein Zylinder zur Betätigung einer Vorrichtung oder eine Schieber sein.

Mit der erfindungsgemäßen Antriebsvorrichtung unter Verwendung von Piezoelementen können Druckerzeugerstationen eingespart werden. Weiterhin ist es möglich, dass Vorteile in Bezug auf Bewegungsgeschwindigkeiten, d.h. im Falle eines Einsatzes des länglichen Körpers als Ventilstößel Verstell- und Schließgeschwindigkeiten, erreicht werden. Die Antriebseinrichtung kann relativ klein ausgebildet werden. Insbesondere wird eine sehr genaue Positionierung ermöglicht. Weiterhin wird auch ein stromloses Halten und/oder Bewegen ermöglicht. Dadurch können eine Leistungsaufnahme und ein Energieverbrauch verringert werden.

Durch die vorliegende Erfindung wird eine Antriebsvorrichtung mit einfachem Aufbau zur Verfügung gestellt, welche längliche Körper genau und schnell bewegen und positionieren kann.

## Patentansprüche

1. Antriebsvorrichtung zum linearen Bewegen von länglichen Körpern (11) mit einer Halteeinrichtung und einer Bewegungseinrichtung (13, 14 und 20, 21, ..., oder 29) zum Halten des länglichen Körpers (11) an seinem Umfang während eines Ruhezustands und/oder während eines Bewegungszustands und zum Veranlassen, dass sich der längliche Körper (11) in seiner Längsachsenrichtung bewegt, wobei die Halteeinrichtung und die Bewegungseinrichtung (13, 14 und 20, 21, ..., oder 29) jeweils Piezoelemente aufweisen und die Halteeinrichtung und die Bewegungseinrichtung (13, 14 und 20, 21, ..., oder 29) eine am länglichen Körper (11) ausgebildete Verzahnung (13) und innerhalb eines an der Antriebsvorrichtung fixierten Rahmens (12), in welchem der längliche Körper (11) verläuft, gelagerte einzelne an jeweiligen Piezoelementen (20, 21, ..., und 29) vorgesehene Zähne (14) aufweisen, die der Verzahnung (13) gegenüberliegen, wobei die Verzahnung (13) einen Zahn weniger aufweist, als Piezoelemente (20, 21, ...., und 29) mit Zähnen (14) vorgesehen sind, **dadurch gekennzeichnet, dass** mehrere Rahmen (12) mit Piezoelementen (20, 21, ..., 29) und zugehörigen Zähnen (14) um den länglichen Körper (11) zur Verkleinerung der Verstellintervalle so angeordnet sind, dass sie entlang seiner Längsachse geringfügig versetzt sind, wobei eine Betätigung von Piezoelementen (20, 21, ...,29) zum Bringen von Zähnen (14) in Eingriff mit Zahnlücken der Verzahnung (13) von Rahmen zu Rahmen erfolgt.

2. Antriebsvorrichtung nach Anspruch 1, **dadurch gekennzeichnet, dass** sich die Zähne (14) und die Verzahnung (13) in einer Ruheposition nicht berühren, dass in einer Anfangsposition (PHASE 0) ein erster Zahn (14) in eine gegenüberliegende Zahnlücke der Verzahnung (13) eingreift, indem er durch das zugehörige Piezoelement (20) vom jeweiligen Rahmen (12) aus ausgestreckt wird, so dass der längliche Körper (11) gehalten wird, und weiterhin die Zähne (14) durch die jeweils zugehörigen Piezoelemente (21, 22, ..., 29) aufeinander folgend vom Rahmen (12) aus ausgestreckt und in Eingriff mit jeweiligen Zahnlücken der Verzahnung (13) gebracht werden, so dass aufgrund der unterschiedlichen Anzahl von Zähnen (14) und Zähnen der Verzahnung (13) und der daraus resultierenden Steigungsdifferenz zwischen den Zähnen (14) und der Verzahnung (13) eine Bewegung des länglichen Körpers (11) erfolgt.

3. Antriebsvorrichtung nach einem der vorangehenden Ansprüche, **dadurch gekennzeichnet, dass** sie eine Steuerungs- und Schalteinrichtung zur gewünschten Aktivierung und Deaktivierung der Piezoelemente (20, 21, ..., 29) aufweist.

4. Antriebseinrichtung nach einem der vorangehenden Ansprüche, **dadurch gekennzeichnet, dass** der längliche Körper (11) ein Ventilstößel für verschiedene Ventile, wie Sitz-, Membran- und Sonderventile, ein Zylinder zur Betätigung einer Vorrichtung oder ein Schieber ist.

## Claims

1. A driving apparatus for a linear movement of elongated bodies (11), comprising: a holding device and a moving device (13, 14 and 20, 21, ..., or 29) for holding the elongated body (11) on its circumference during a rest position and/or during a motion position; and for initiating a motion of the elongated body (11) in a direction longitudinally of its axis, wherein the holding device and the moving device (13, 14 and 20, 21, ..., or 29) each comprise piezo elements, and the holding device and the moving device (13, 14 and 20, 21, ..., or 29) comprise a gear tooth system (13) formed on the elongated body (11) and within a frame (12) fixed on the driving apparatus, in which the elongated body (11) runs, individual teeth (14) which are each supported on a respective piezo element (20, 21, ..., or 29) which face the gear tooth system(13), whereby the gear tooth system (13) being one less than the number of piezo elements (20, 21, ..., or 29) that support the individual teeth (14), **characterized in that** a plurality of frames (12) having piezo elements (20, 21, ..., or 29) supporting individual teeth (14) are arranged about the elongated body (11) for decreasing the size of adjustment intervals with a slight offset along the longitudinal axis, wherein an activation of the piezo elements (20, 21, ..., or 29) brings the individual teeth (14) into engagement with tooth spaces of the gear tooth system (13) from one frame to the other frame. in the direction of the longitudinal axis.

2. The driving apparatus of claim 1, **characterized in that** the individual teeth (14) and the gear tooth system (13) do not make contact with each other in the rest position, wherein in an initial position (PHASE 0) a first piezo element (20) moves a corresponding first individual tooth (14) away from the frame (12) and into engagement with an opposite tooth space in the gear tooth system (13), thereby retaining the elongated body (11), whereafter other piezo elements (21, ..., or 29) sequentially move corresponding individual teeth (14) away from the frame (12) and into engagement with respective other tooth spaces in the gear tooth system (13), whereby the different number of teeth (14) of the gear tooth system (13) and of the individual teeth representing a difference in pitch between the individual teeth (14) and the gear tooth system (13) causes the elongated body (11) to move.

3. The driving apparatus of one of the preceding claims, **characterized in that** a control and switching unit for activating and deactivating the piezo elements (20, 21, ..., or 29) is provided.

4. The driving apparatus of one of the preceding claims, **characterized in that** the elongated body (11) comprises a tappet for a valve, such as seat valves, membrane valves and special valves, a cylinder for operating a device or a slider.

## Revendications

1. Dispositif d'entraînement pour le déplacement linéaire de corps allongés (11), comportant un dispositif de fixation et un dispositif de déplacement (13, 14 et 20, 21, ..., ou 29) pour maintenir le corps allongé (11) sur son pourtour pendant un état de repos et/ou pendant un état de déplacement et pour faire en sorte que le corps allongé (11) se déplace dans la direction de son axe longitudinal, ledit dispositif de fixation et ledit dispositif de déplacement (13, 14 et 20, 21, ..., ou 29) comportant chacun des éléments piézoélectriques et ledit dispositif de fixation et ledit dispositif de déplacement (13, 14 et 20, 21, ..., ou 29) comportant une denture (13), réalisée sur le corps allongé (11), et différentes dents (14) qui sont logées à l'intérieur d'un cadre (12), qui est fixé sur le dispositif d'entraînement et dans lequel se déplace le corps allongé (11), et sont prévues sur chacun des éléments piézoélectriques (20, 21, ..., et 29) et qui sont disposées en face de la denture (13), ladite denture (13) comportant une dent de moins que les dents (14) prévues sous forme d'éléments piézoélectriques (20, 21, ..., et 29), **caractérisé en ce que** plusieurs cadres (12) avec des éléments piézoélectriques (20, 21, ..., 29) et des dents (14) associées sont disposés autour du corps allongé (11) en vue de réduire les intervalles de réglage, de telle sorte que lesdits cadres sont légèrement décalés le long de l'axe longitudinal, sachant que les éléments piézoélectriques (20, 21, ..., 29) sont manoeuvrés d'un cadre à l'autre pour faire engrener les dents (14) dans les entredents de la denture (13).

2. Dispositif d'entraînement selon la revendication 1, **caractérisé en ce que** les dents (14) et la denture (13) n'entrent pas en contact entre elles dans une position de repos, **en ce que** dans une position initiale (phase 0), une première dent (14) engrène dans un entredent opposé de la denture (13), du fait qu'elle est étirée par l'élément piézoélectrique (20) à partir du cadre (12) correspondant, de telle sorte que le corps allongé (11) est maintenu et, en outre, les dents (14) sont étirées les unes après les autres à partir du cadre (12) par les éléments piézoélectriques (20, 21, ..., 29) respectivement associés et sont amenées en prise avec les entredents correspondants de la denture (13), de telle sorte que, compte tenu du nombre différent de dents (14) et de dents de la denture (13) et de la différence de pente en résultant entre les dents (14) et la denture (13), il se produit un déplacement du corps allongé (11).

3. Dispositif d'entraînement selon l'une quelconque des revendications précédentes, **caractérisé en ce que** ledit dispositif comporte un dispositif de commande et de commutation pour l'activation et la désactivation souhaitées des éléments piézoélectriques (20, 21, ..., 29).

4. Dispositif d'entraînement selon l'une quelconque des revendications précédentes, **caractérisé en ce que** le corps allongé (11) est un piston de soupape pour différentes soupapes, telles que des soupapes à siège, des soupapes à membrane et des soupapes spéciales, un vérin pour manoeuvrer un dispositif ou un coulisseau.
